Europäisches Patentamt

European Patent Office

Office européen des brevets

(11) Publication number: **0 262 283**
**A1**

## (12) EUROPEAN PATENT APPLICATION

(21) Application number: **87100675.5**

(22) Date of filing: **21.01.87**

(51) Int. Cl.⁴: **E04B 2/36** , **A01G 9/02** , **E02D 17/20**

(30) Priority: **29.09.86 JP 230991/86**
**03.10.86 JP 235640/86**

(43) Date of publication of application:
**06.04.88 Bulletin 88/14**

(84) Designated Contracting States:
**DE FR GB IT**

(71) Applicant: **GIKEN KOGYO Co., Ltd.**
**13-10, Sakuragaoka-cho Shibuya-ku**
**Tokyo 150(JP)**

(72) Inventor: **Tozawa, Ryoiti**
**13-10, Sakuragaoka-cho**
**Shibuya-ku Tokyo 150(JP)**

(74) Representative: **Heidrich, Udo, Dr. jur.,**
**Dipl.-Phys.**
**Franziskanerstrasse 30**
**D-8000 München 80(DE)**

(54) **Block for environmental maintenance.**

(57) A block (A) for environmental maintenance available for both horizontal stacking and gradient stacking reasonably despite its being a unitary block.

According to the invention, such block comprises a front wall (2) a rear bearing plate (4) inclined rearward, a coupling wall (1L, 1R) for coupling the front wall to the rear bearing plate, the front wall (2) forms a space zone (3) for planting and so on which is closed frontward independently or in cooperation with the front walls of blocks adjacent crosswise thereto, a projection (5R, L) is provided on a lower or upper surface of the coupling wall (1R, 1L), and on an upper or lower surface of the coupling wall (1L, 1R) corresponding thereto, there provided are a first recession (8, 11) engaging with the above-mentioned projection when upper-stage blocks are stacked up slidingly in a depth direction to lower-stage blocks and a second recession engaging with the projection when the upper-and lower-stage blocks are stacked up with the front walls kept facing alike.

## F I G. 1

# BLOCK FOR ENVIRONMENTAL MAINTENANCE

2. Background of the Invention:

(1) Field of the Invention:

The present invention relates to a retaining block used in road, bank, park, housing site and the like, functioning as a block for environmental maintenance provided with a space zone for tree planting and tiny animal breeding and, more particularly, to a block for environmental maintenance available for both horizontal stacking and gradient stacking despite being a unitary block.

(2) Description of the Prior Art:

There prevailing recently is a block for environmental maintenance which is provided with a space zone for tree planting and tiny animal breeding as a retaining block used in road, bank, park, housing site and the like.

Such block for environmental maintenance varies in structure but is classified roughly into a horizontal stacking block and a gradient stacking block. The horizontal stacking block is a hollow column in form entirely as disclosed in Japanese Utility Model Publication No. 3873/1983, and an arrangement is such that a space for planting will be left and so formed in front of lower-stage blocks when upper-stage blocks are stacked up slidingly each in a depth direction. Then, the gradient stacking block has an inclined plate or a bearing plate on the front as disclosed in Japanese Utility Model Publication No. 16001/1979, which is stacked up according to a normal gradient.

In the former, a conditioning soil given so deep may allow an extensive planting of straight-root tree, bush, laurilignosa, decorative plant and so on, and further the conditioning soil can be leveled to minimize erosion and outflow of a surface soil, which is not only preferable for a growth of the tree but also suitable for breeding of tiny animals, however, a front wall of the block is capable of being exposed almost entirely at the time of leaf fall according to the kind of trees, which is disadvantageous, on the other hand, to spoil a sight.

In the latter, meanwhile, since a front end surface of the bearing plate inclined upward is only exposed even at the time of leaf fall, a sight will be less spoiled, however, the conditioning soil on the bearing plate is capable of being eroded to flow out, on the other hand, and besides, a limited volume of the conditioning soil is restrictive of accepting only a part of plant or, for example, azalea, for planting.

Then, in case the horizontal stacking block is intended for gradient stacking, a merit of the horizontal stacking block is reduced to half while its demerit is accelerated further, and a similar result is incurrable when the gradient stacking block is used for horizontal stacking.

Thus, the actual circumstances are such that a unitary block of this kind cannot be applied for both horizontal stacking and gradient stacking reasonably at the same time as is characteristic, a decision on which type of block to use must be made beforehand according to the site situation in consideration of merits of both the blocks, and then the horizontal stacking block or the gradient stacking block is selected for stacking work.

(3) Summary of the Invention:

In view of the circumstances mentioned above, it is an object of the invention to provide a block for environmental maintenance available for both horizontal stacking and gradient stacking reasonably despite its being a unitary block.

According to the invention, such block comprises a front wall, a rear bearing plate inclined rearward, a coupling wall for coupling the front wall to the rear bearing plate, the front wall forms a space zone for planting and so on which is closed frontward independently or in cooperation with the front walls of blocks adjacent crosswise thereto, a projection is provided on a lower or upper surface of the coupling wall, and on an upper or lower surface of the coupling wall corresponding thereto, there provided are a first recession engaging with the above-mentioned projection when upper-stage blocks are stacked up slidingly in a depth direction to lower-stage blocks and a second recession engaging with the projection when the upper-and lower-stage blocks are stacked up with the front walls kept facing alike, therefore a space for planting and so on will be secured in a drop in level of the upper and lower blocks to a complete horizontal stacking from engaging the projection with the first recession with the front walls coming on the front, further a space for planting and so on will be secured between the bearing plates of the upper and the lower blocks to a complete gradient stacking from engaging the projection with the second recession with the rear bearing plates coming on the front, thus providing a block available for both horizontal stacking and gradient stacking despite being a unitary block.

According further to the invention, since the upper and lower blocks are engaged securely through the projection and the recession, a retaining wall firm and stable can be constructed.

(4) Brief Description of the Drawings:

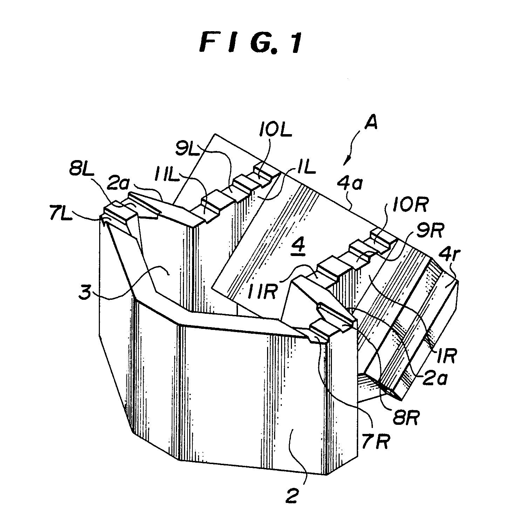

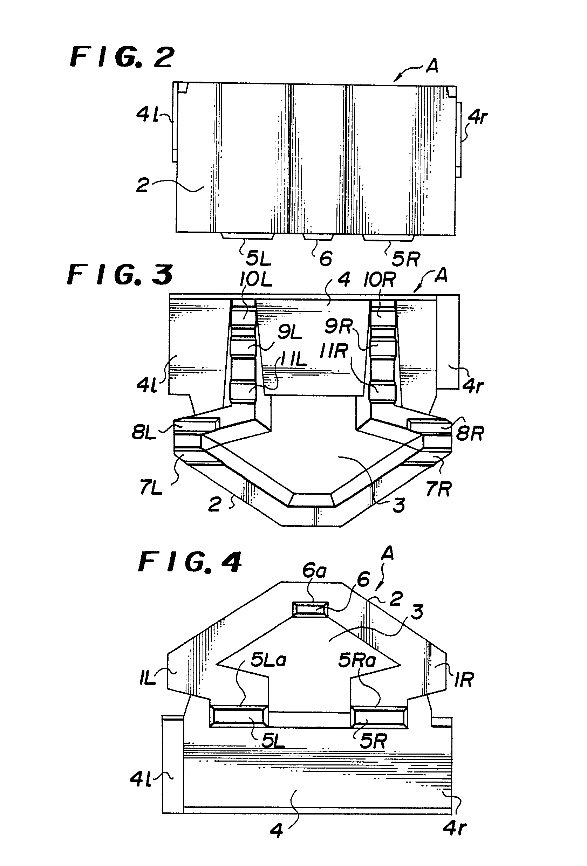

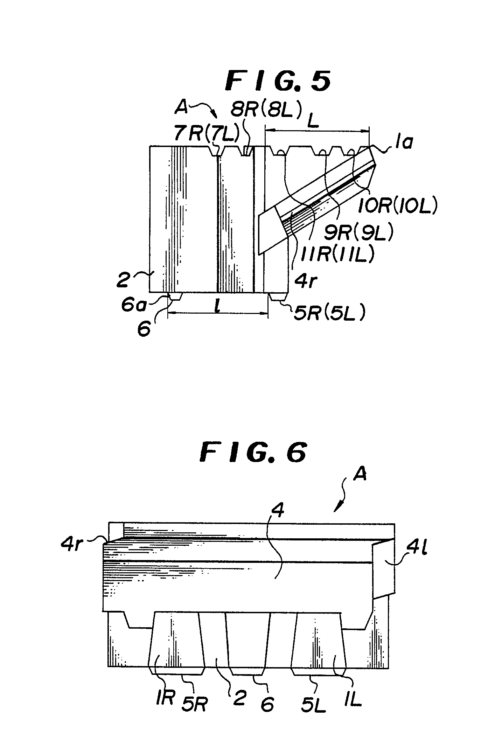

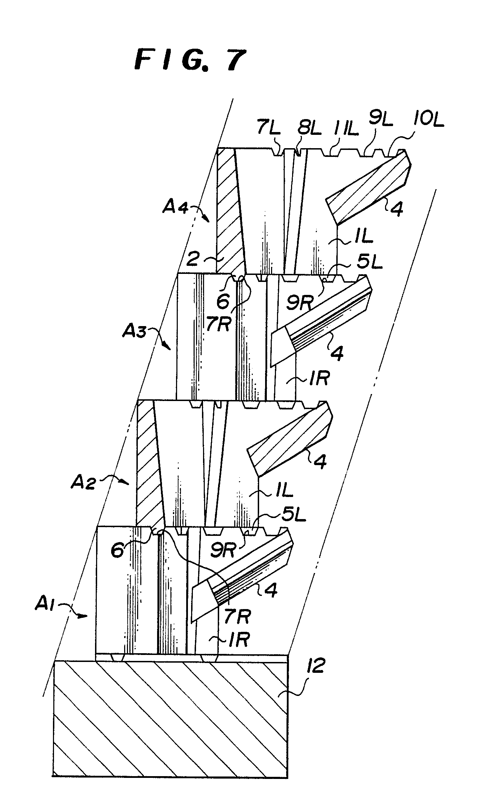

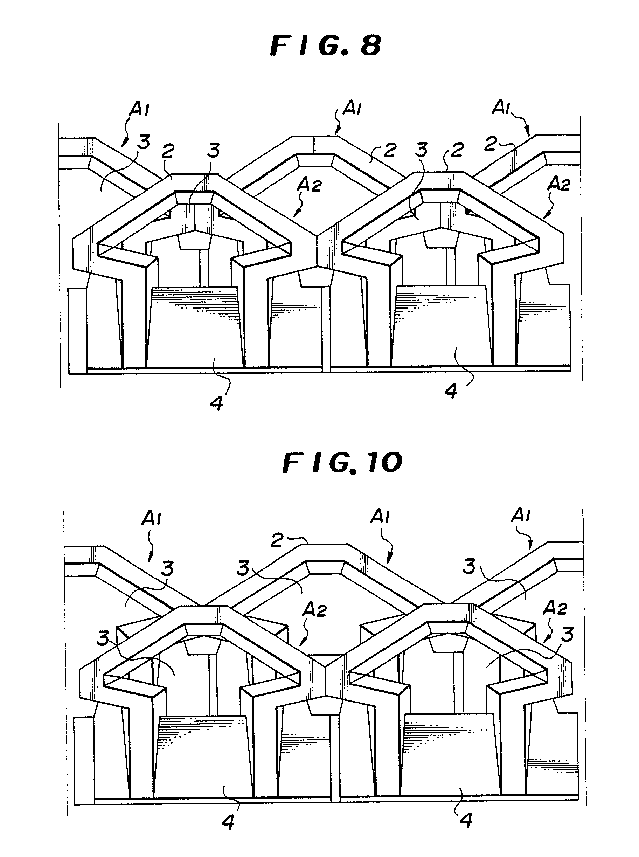

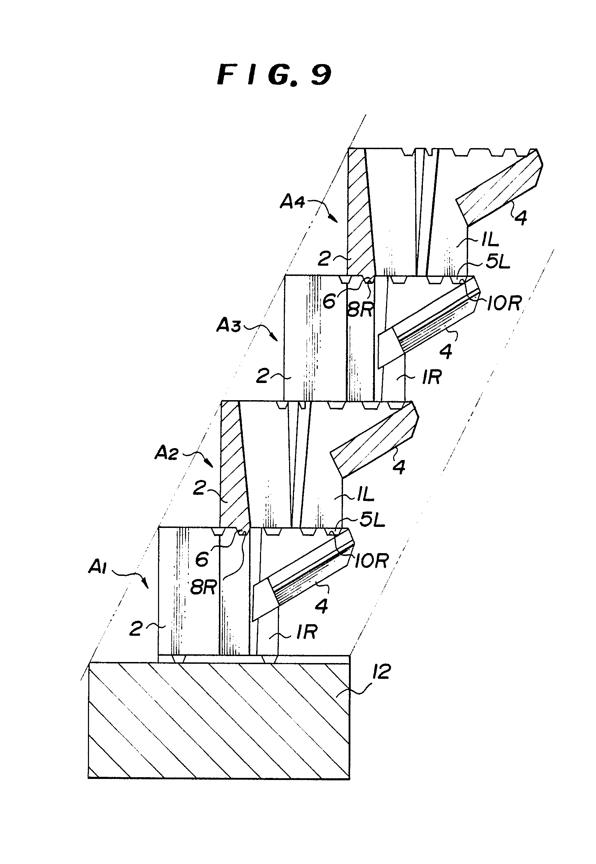

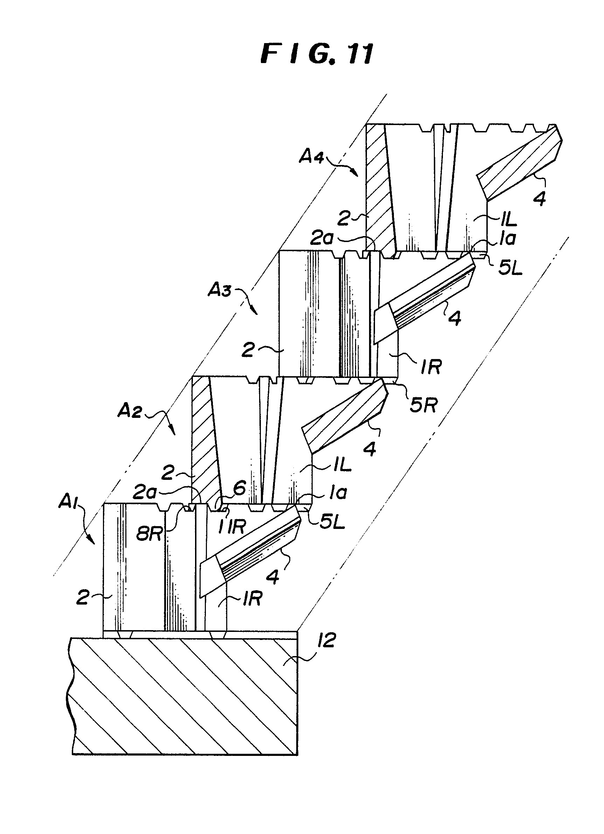

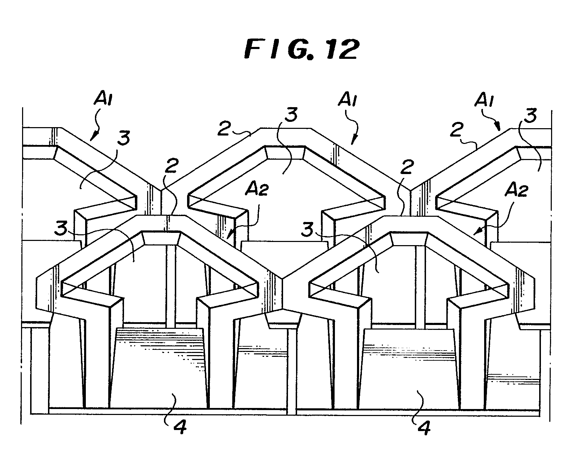

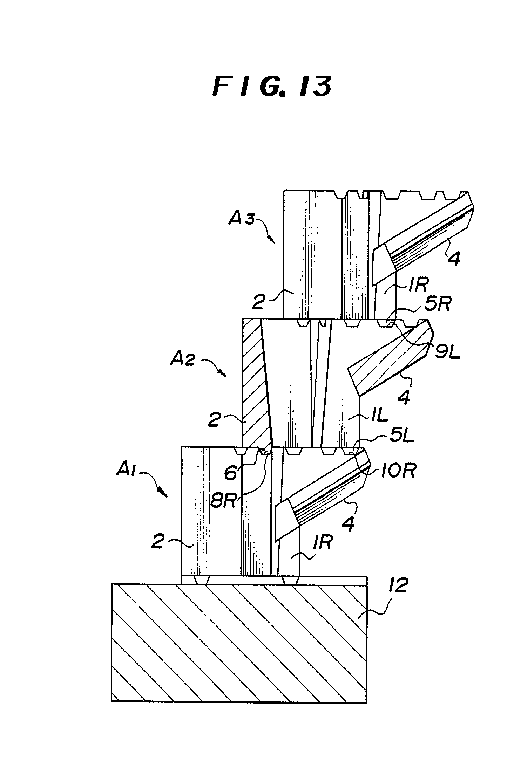

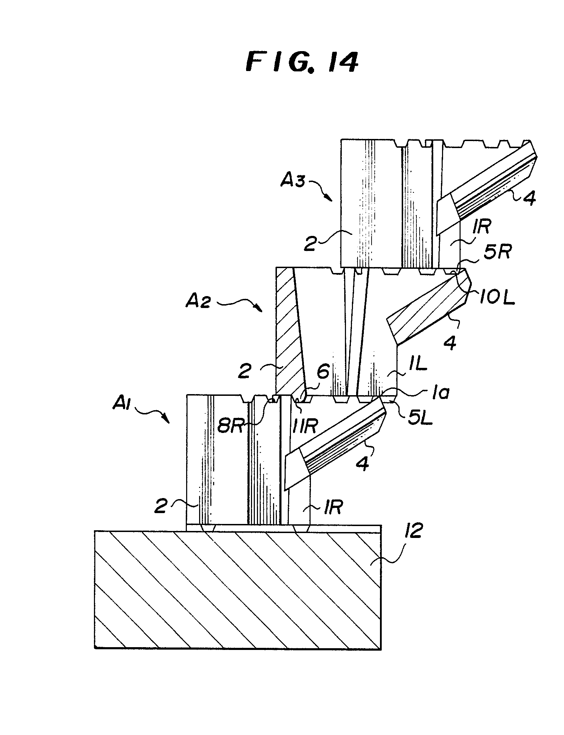

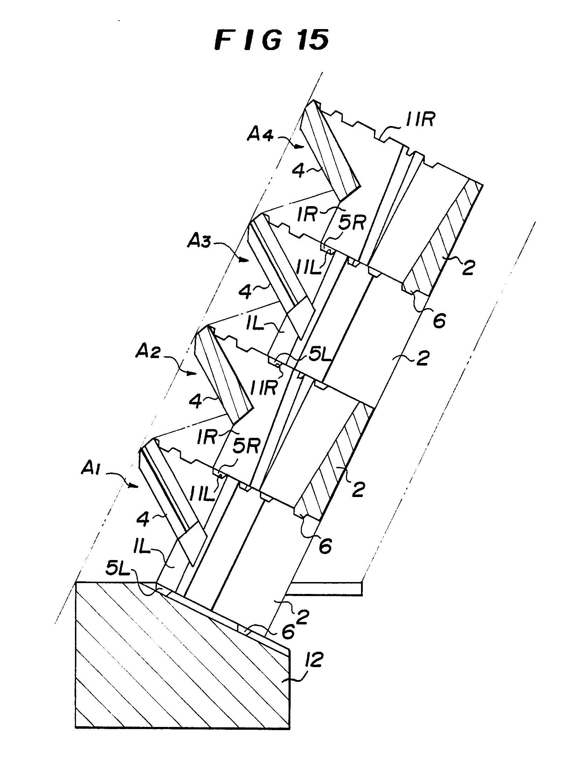

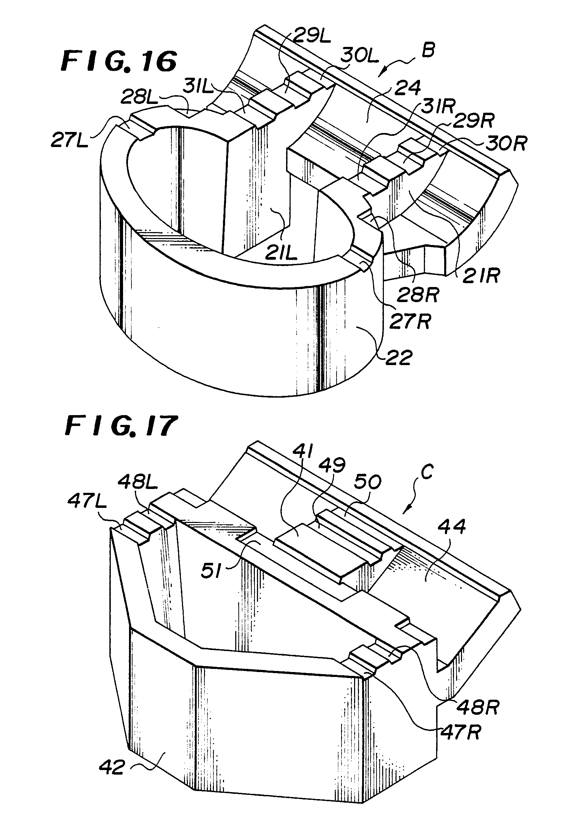

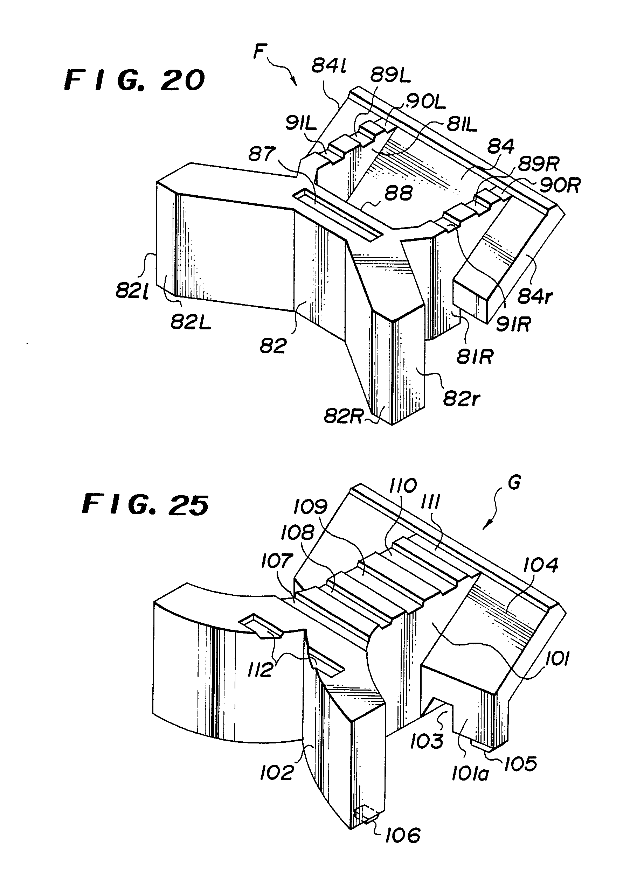

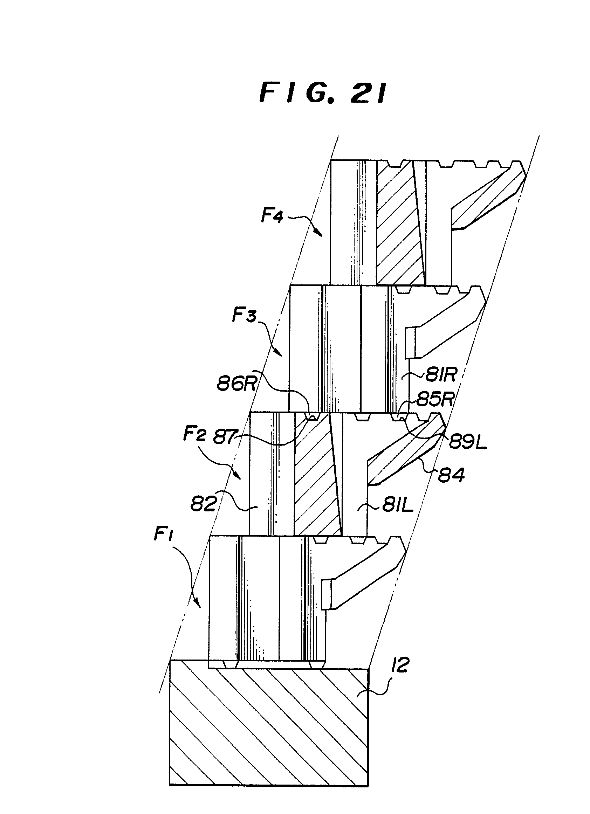

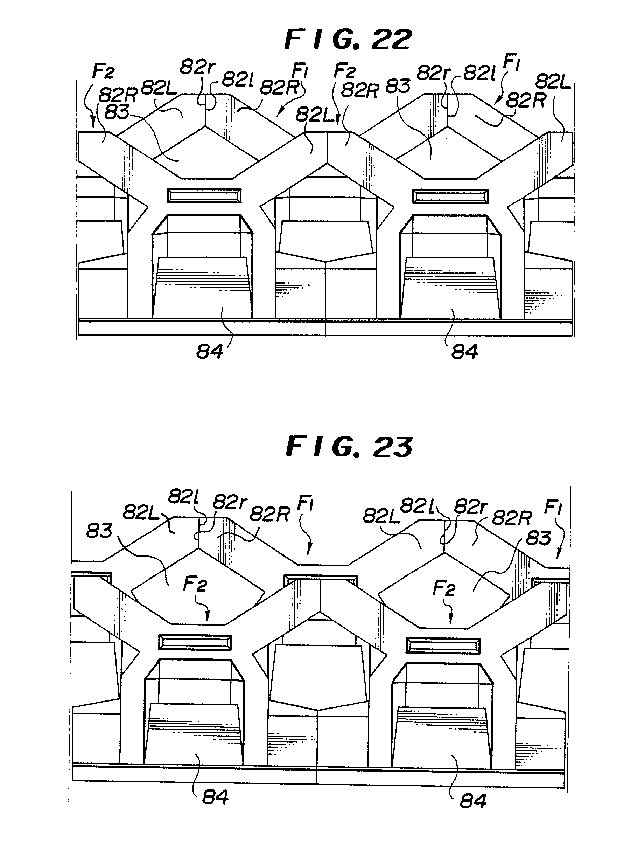

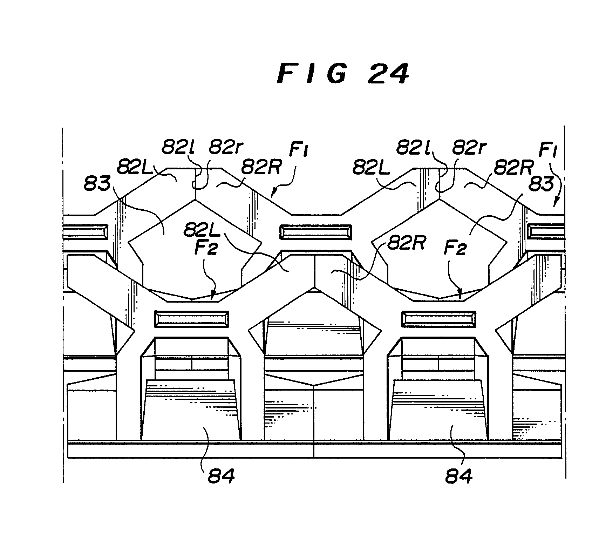

FIG. 1 is a perspective view of a block for environmental maintenance which is given in one embodiment of the invention; FIG. 2 is a front view of the block; FIG. 3 is a plan view of the block; FIG. 4 is a bottom view of the block; FIG. 5 is a right side view of the block; FIG. 6 is a rear elevation of the block; FIG. 7 is a longitudinal sectional view of a retaining wall when the blocks are stacked up horizontally at a 3′ gradient; FIG. 8 is a plan view of FIG. 7; FIG. 9 is a longitudinal sectional view of the retaining wall when the blocks are staked up horizontally at a 5′ gradient; FIG. 10 is a plan view of FIG. 9; FIG. 11 is a longitudinal sectional view of the retaining wall when the blocks are stacked up horizontally at a 7′ gradient; FIG. 12 is a plan view of FIG. 11; FIG. 13 is a longitudinal sectional view of the retaining wall when the blocks are stacked up horizontally at a 4′ gradient; FIG. 14 is a longitudinal sectional view of the retaining wall when the blocks are stacked up horizontally at a 6′ gradient; FIG. 15 is a longitudinal sectional view of the retaining wall when the blocks are stacked up slantingly; FIG. 16 to FIG. 20 are perspective views of blocks given in other embodiments of the invention; FIG. 21 is a longitudinal sectional view of a retaining wall when the blocks of FIG. 20 are stacked up horizontally at a 3′ gradient; FIG. 22 is a plan view of FIG. 21; FIG. 23 is a plan view of the retaining wall when the blocks of FIG. 20 are stacked up horizontally at a 5′ gradient; FIG. 24 is a plan view of the retaining wall when the blocks of FIG. 20 are stacked up horizontally at a 7′ gradient; FIG. 25 is a perspective view of a block given in further embodiment of the invention.

3. Detailed Description of the Invention:

The invention will now be described in detail with reference to the illustrative examples.

FIG. 1 to FIG. 6 represent a block A given in one embodiment of the invention, wherein reference characters 1L and 1R denote left and right side walls standing face to face in parallel which constitute coupling walls, and there is formed integrally, on the front end portion thereof, a front wall 2 expanding once outward transversely and then protruding forward almost like a triangle. The front wall 2 is even with the side wall 1 and has the lower surface formed broader than the upper surface, and an internal space 3 surrounded by the front wall 2 forms a planting space.

A reference numeral 4 denotes a bearing plate formed integrally on the rear end portions of both the side walls 1L, 1R, the bearing plate 4 is then provided protrusively as slanting rearward from a position coming somewhat lower than the central portion in a height direction of rear ends of the side walls 1L, 1R and also coming near to the front wall 2, its upper end edge 4a coincides with upper end surfaces of both the side walls 1L, 1R, and both ends 4$l$, 4r extend outward of the side walls 1L, 1R and thus project somewhat outside of both sides of the front wall 2. Then, a drop in level is formed on the upper surface of the side end portion 4r positioned on the right side in FIG. 1 and also on the lower surface of the side end portion 4$l$ positioned on the left side therein, and mutual bearing plate end portions of the blocks adjacent in a cross direction of a retaining wall are ready for lapping with a reasonable tolerance.

Main projections 5L, 5R are formed on lower surfaces of the side walls 1L, 1R respectively, and one auxiliary projection 6 is provided on the lower surface of a nose portion of the front wall 2. An interval $l$ from front portions 5La, 5Ra of the main projections 5L, 5R to a front portion 6a of the auxiliary projection 6 is set so as to be equal to a length L (FIG. 5) of top portions of the side walls 1L, 1R.

Then, a length from a leading end of the upper surface of the front wall 2 to a rear end of the upper surface of the side walls 1L, 1R is set long enough for the main projections 5L, 5R of the upper-stage block A to be locked on rear ends of the side walls 1L, 1R of the lower-stage block A when the blocks A are stacked up at a 7′ gradient.

Reference characters 7L, 7R and 8L, 8R represent auxiliary projection engaging grooves formed on the tops of both side ends of the front wall 2 at regular intervals each in a depth direction of the block A, the fore grooves 7L, 7R of those 7L, 7R and 8L, 8R are provided at a position corresponding to the auxiliary projection 6 of the upper-stage block A when the upper-stage blocks are slid at a constant length in the depth direction and so stacked up zigzag as will be 3′ in the normal gradient, and the rear auxiliary projection engaging grooves 8L, 8R are provided at a position corresponding to the auxiliary projection 6 of the upper-stage block when the blocks are stacked up likewise at 5′ gradient.

Reference characters 9L, 9R and 10L, 10R denote first grooves for main projection engaging which are formed on the upper surfaces of both the side walls 1L, 1R in two pieces each at regular intervals in the depth direction of the block A as in the case of the auxiliary projection engaging grooves 7L, 7R and 8L, 8R, the fore grooves 9L, 9R are provided at a position corresponding to the main projections 5L, 5R of the upper-stage block when the blocks are stacked up at a 3' gradient, while the rear grooves 10L, 10R are provided at a position corresponding to the main projections 5L, 5R of the upper-stage block when the blocks A are stacked up at a 5' gradient.

Reference characters 11L, 11R represent second grooves for main projection engaging, which are formed on upper surfaces of both the side walls 1L, 1R, positioned ahead of the first grooves 9L, 9R and 10L, 10R and provided at a position corresponding to the main projections 5L, 5R of the upper-stage block when the blocks A are stacked up with the front wall 2 kept facing alike.

Then, the above-mentioned grooves 7L, 7R to 11L, 11R are all formed in length or form ready for sliding the engaged state with the projections 5L, 5R or 6L, 6R in a cross direction of the block A.

Meanwhile, the block A constructed such will be applied for execution as follows.

First, the case where the blocks are stacked up horizontally at a 3' gradient will be described with reference to FIG. 7 and FIG. 8.

Blocks A1 on the first stage are disposed on a horizontal foundation 12 with the front wall 2 coming on the front side. In this case, both side ends of the front wall 2 of the block A1 are placed opposite to both side ends of the front wall of the blocks adjacent thereto (FIG. 8), and the rear bearing plate 4 has the both side ends 4r, 4l lapped on side ends 4l, 4r of the rear bearing plate 4 of the adjacent blocks.

Next, second-stage blocks A2 are stacked up so as to cover the first-stage adjacent two blocks A1, A1. In this case, the front wall 2 will be kept coming on the front side needless to say, the auxiliary projection 6 of the second-stage block A2 is engaged with the auxiliary projection engaging fore groove 7L or 7R of the first-stage block A1, while the main projections 5L, 5R are engaged with the fore grooves 9L, 9R of the first grooves 9L, 9R and 10L, 10R. Thus, the second-stage blocks A2 are stacked up automatically at a 3' gradient, and the planting space 3 of the first-stage block A1 is opened in the drop in level between both stages. Blocks A3, A4 on the third stage and fourth stage are stacked up likewise so as to have the main projections 5L, 5R and the auxiliary projection 6 engaged with the engaging fore grooves 9L, 9R and 7L, 7R respectively, the planting space exposed in the drop in level on each stage is filled up with soil and sand opportunely and a desired plant is planted therein, thus completing the execution work.

Since the main projections 5L, 5R and the auxiliary projection 6 are engaged with the lower-stage corresponding grooves 9L, 9R and 7L, 7R, and both side ends 4l, 4r of the bearing plate 4 are overlapped, the retaining wall thus constructed is unified generally and strong and stable enough to resist a soil pressure working from behind, and further since the blocks A1 to A4 are opened downward, a high maintainability for soil and sand is ensured consequently.

Further, since only the rear bearing plate 4 inclined rearward is provided on the backs of the blocks A1 to A4, and a portion covering a lower end of the rear bearing plate 4 to lower ends of the side walls 1L, 1R is opened, soil and sand within the planting space 3 are kept continuous with the ground soil, and thus a water content from the ground can be absorbed reasonably.

Next, the case where the blocks A are used for horizontal stacking with the normal gradient varied therefor will be described with reference to FIG. 9 to FIG. 14.

From stacking up the blocks A with the auxiliary projection 6 of the blocks A2, A3, A4 engaged with the auxiliary projection engaging rear groove 8L or 8R of the lower-stage blocks and the main projections 5L, 5R engaged with the rear grooves 10R, 10L of the main projection engaging first grooves 9L, 9R and 10L, 10R of the lower-stage blocks, the retaining wall having automatically a 5' gradient will be constructed as illustrated in FIG. 9 and FIG. 10.

Then, since the interval l from the front portions 5La, 5Ra of the main projections 5L, 5R to the front portion 6a of the auxiliary projection 6 is set to be equal to the length L of the top portions of the side walls 1L, 1R, the retaining wall having a 7' gradient can be constructed automatically (FIG. 11 and FIG. 12) from stacking up the blocks with the auxiliary projection 6 of the blocks A2, A3, A4 locked on a shoulder portion 2a of the front wall 2 of the lower-stage blocks and the main projections 5L, 5R locked on an upper end edge 1a of the side walls 1R, 1L of the lower-stage blocks.

In case, further, where the blocks are stacked up horizontally at a 4' or 6' gradient, the blocks can be stacked up at the 3' and 5' gradients as described on a foundation inclined rearward at a predetermined angle, however, the blocks can be stacked up otherwise on a horizontal foundation according to methods indicated in FIG. 13 and FIG. 14. That is, in the case of stacking at a 4' gradient, the first-stage blocks A1 and the second-stage blocks A2 are stacked up on the horizontal founda-

tion 12 at a 5' gradient, the second-stage blocks A2 and the third-stage blocks A3 are stacked up thereon at a 3' gradient, then the paired serial stacking is repeated for the fourth stage and over, thereby obtaining a 4' gradient as a whole on the wall surface thus constructed. As for a 6' gradient stacking, the first-stage blocks A1 and the second-stage blocks A2 are stacked up at a 7' gradient, and the second-stage blocks A2 and the third-stage blocks A3 are stacked up at a 5' gradient as shown in FIG. 14, thereby arranging the wall surface at a 6' gradient as a whole.

According to the block A relating to the embodiment, the first grooves 9R, 9L or 10R, 10L engaging with the main projections 5L, 5R are formed more than one on upper surfaces of the side walls 1L, 1R, therefore when the blocks are stacked up horizontally with the front wall 2 coming on the front side, the blocks A are available to constructing a retaining wall with a plurality of gradients stably despite being unitary each from changing pertinently the grooves 9R, 9L and 10R, 10L to engage. Then in one retaining wall, it is realizable that the blocks are stacked up like a rampart of the old Japanese castle by changing the grooves 7R, 7L to 10R, 10L to be engaged with the projections 5L, 5R and 6 halfway of the stages.

FIG. 15 represents the case where the blocks A according to the above-described embodiment are used for gradient stacking. In this case, with the front and the back of the block A inverted to have the rear bearing plate 4 on the front side, the first-stage blocks A1 are disposed on the foundation 12, and then the second-stage blocks A2 are stacked up zigzag thereon.

The upper-stage blocks A2 may be stacked up right above the lower-stage blocks A1 in this case, however, the auxiliary projection 6 of the upper-stage blocks A2 is positioned between the front walls 2, 2 protuberant ahead of the adjacent two blocks A1, A1 on the lower stage, and the main projections 5L, 5R of the upper-stage block A2 engage with the second main projection engaging grooves 11L, 11R formed on the upper surface of the side wall 1 of the lower-stage block A1, therefore the blocks A1, A2 interlock vertically to stable stacking.

Similarly, the third-stage and fourth-stage blocks are stacked up in order, the internal space of the front wall 2 is filled up with soil and sand, soil and sand are also piled up on the rear bearing plate 4, and a suitable plant is implanted in the soil on the rear bearing plate 4, thus closing the execution work.

Since the main projections 5L, 5R and the grooves 11L, 11R are securely engaged with each other, the blocks A thus stacked up at gradients will construct a retaining wall outstanding in stability, and a water content from the ground will be absorbed efficiently by the plant on the bearing plate as soil and sand within the front wall positioned on the rear side are continuous with the ground soil.

The block A relating to the embodiment is available both for horizontal stacking and gradient stacking as described above, however, while not so indicated herein, the block is also available for the execution wherein the blocks are stacked up horizontally in several stages, and then the block A according to the embodiment is stacked up on the uppermost stage with the rear bearing plate coming on the front side, and further since the block A has the recessions wherewith the main projections 5L, 5R and the auxiliary projection 6 are engaged formed as the grooves 7L, 7R to 11L, 11R capable of shifting the projections 5L, 5R and 6 in a cross direction, and both side ends 4l, 4r of the rear bearing plate 4 are overlapped with tolerance, the above engaged state can securely be maintained against a possible elongation or contraction which may arise at the time of curvilinear execution of the upper-stage blocks in both horizontal stacking and gradient stacking.

FIG. 16 to FIG. 19 represent blocks B to E given in other embodiments of the invention. First, the block B has a front wall 22 formed like ellipse, grooves 27L, 27R to 31L, 31R functioning as the grooves 7L, 7R to 11L, 11R in the above-described embodiment are formed on the upper surfaces of both side walls 21L, 21R through which a rear bearing plate 24 is coupled to the front wall 22 and also on the upper surface of the front wall 22 at predetermined portions, an auxiliary projection or a main projection (not indicated) is provided on lower surfaces of the side walls 21L, 21R, and the block is used for stacking exactly in the same way as the embodiment described hereinabove. According then to this embodiment, since the front wall 22 looks round, a retaining wall viewed soft can be constructed in the case of horizontal stacking.

The block C shown in FIG. 17 comprises coupling a front wall 42 almost triangular and a bearing plate 44 through a coupling wall 41 consisting of a T-shaped single wall member in the middle thereof, and there formed are auxiliary projection engaging grooves 47L, 47R, 48L, 48R and main projection engaging first and second grooves 49 to 51, as in the case of embodiment described hereinabove. In the block C, a manner of the stacking is also similar to the foregoing two embodiments, thus the block C being available for both horizontal stacking and gradient stacking, and a varying gradient stacking is then realizable by stacking up the blocks with the positions whereat the projections are engaged with the grooves 47L, 47R, 48L, 48R or 49 to 51 shifted properly in a depth direction of the block C in the case of horizontal stacking.

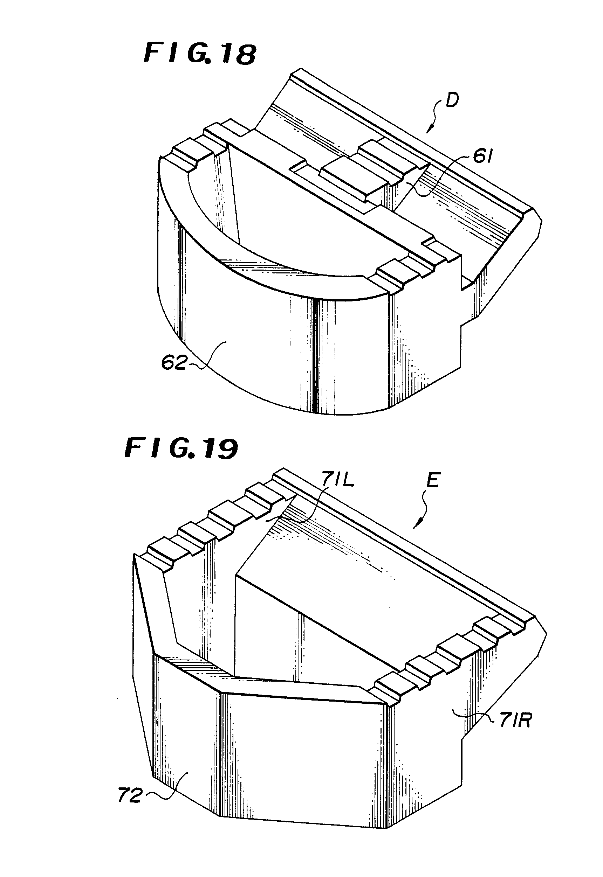

The block D shown in FIG. 18 comprises forming integrally a front wall 62 looking round as in the case of block B on a single coupling wall 61 shaped like "T", and while not illustrated, a means for communicating with the back ground is secured for the block D by providing an opening at the center of a front surface of the coupling wall 61.

According to the blocks C and D, engaging portions are brought together to the coupling walls 41, 61 each, therefore the manufacture can be facilitated comparatively, and a manufacture and assembling and demounting of a molding flask also become easy.

The block E shown in FIG. 19 is that for which both side end portions of a front wall 72 are unified straight to both side walls 71L, 71R working as coupling walls, and thus the construction is further simplified to easier manufacture than the blocks C, D.

FIG. 20 and FIG. 25 represent blocks F, G respectively which are given in further embodiments of the invention, and the blocks F, G are different from the above-described blocks A to E in a form of the front wall for forming a space for planting and so on.

In the block F firstly, a front wall 82 connects front ends of left and right coupling walls or side walls 81L, 81R and stretches linearly to expand slantingly forward at a predetermined angle from the front ends of the side walls 81L, 81R. The front wall 82 is even with the side walls 81L, 81R and has a length between both side end portions set to be almost equal to the length between both side ends of a rear bearing plate 84 which will be described hereinlater, thus forming an effective width of the block. Then, when the front wall 82 is disposed with both side end surfaces 82ℓ, 82r placed opposite to the front wall 82 of the other blocks adjacent in a cross direction, a planting space 83 is formed rearward of the two front walls thus placed opposite to each other (FIG. 21).

A reference numeral 84 denotes a bearing plate formed integrally on rear end portions of both the side walls 81L, 81R, and both side ends 84ℓ, 84r of the bearing plate 84 stretch horizontally outward of the side walls 81L, 81R, thereby placing both side end surfaces opposite to each other between the blocks adjacent in a cross direction of the retaining wall.

Reference characters 85L, 85R represent main projections provided on lower surfaces of both the side walls 81L, 81R, 86L, 86R represent auxiliary projections provided on lower surfaces of both side end portions 82L, 82R of the front wall 82, 87 represents an auxiliary projection engaging groove formed on the upper surface of the front wall 82 at the center, the groove 87 having a length at least double of the auxiliary projections 86L, 86R, and the groove is formed at a position whereat the auxiliary projections 86L, 86R of the upper-stage block are engaged when the blocks are stacked up zigzag to a normal gradient coming at 3'.

Then, the central portion of the front wall 82 is formed to have a thickness capable of locking the fronts of the auxiliary projections 86L, 86R of the upper-stage block on its inside 88 when the blocks are stacked up to a normal gradient coming at 5'.

Reference characters 89L, 89R and 90L, 90R denote main projection engaging two first grooves formed on upper surfaces of both side walls 81L, 81R, the front grooves 89L, 89R are those for 3' gradient, while the rear grooves 90L, 90R are for 5' gradient.

Reference characters 91L, 91R represent main projection engaging second grooves formed on upper surfaces of both side walls 81L, 81R, which are provided at positions corresponding to the main projections 85L, 85R of the upper-stage block when the blocks are stacked up with the front walls 82 facing alike.

Then, the above-mentioned grooves 87, 89L, 89R, 90L, 90R, 91L, 91R are sized or formed so as to shift the engaging state with the projections 85L, 85R, 86L, 86R in a cross direction of the block.

The block F constructed as above is subjected to an execution work as in the case of blocks A to E.

In the case of horizontal stacking at 3' gradient, for example, blocks F1 on the first-stage are disposed with the front wall 82 coming on the front side, both side end surfaces 82ℓ, 82r of the front wall 82 are placed opposite to both side end surfaces 82r, 82ℓ of the front wall of the blocks adjacent thereto, and the rear bearing plate 84 also has both side ends 84ℓ, 84r placed opposite to both side ends 84r, 84ℓ of the rear bearing plate 84 of the blocks adjacent thereto.

Then, the second-stage block F2 is stacked to cover the adjacent two blocks F1, F1 on the first stage. In this case, while the auxiliary projection 86L or 86R of the second stage block F2 is engaged with the auxiliary projection engaging groove 97 of the first-stage block F1, the main projections 85L, 85R of the block F2 are engaged with fore grooves 89R, 89L of the first grooves. The second-stage blocks F2 are thus stacked up automatically at a 3' gradient, and the planting space 83 formed in a drop in level between both stages by the front walls of the blocks adjacent in a transverse direction is opened (FIG. 22). The third-stage and fourth-stage blocks F3, F4 will be then stacked up likewise to an execution work.

In the case of horizontal stacking with varying gradients, fronts of the auxiliary projections 86L, 86R of the blocks F2, F3, F4, for example, are locked on the inside 88 at the center of the front wall 82 of the lower-stage block, and the main projections 85L, 85R are engaged with the rear grooves 90R, 90L of the main projection engaging first grooves of the lower-stage block, then a retaining wall with a 5' normal gradient will be constructed automatically as shown in FIG. 23.

Then, from stacking up the blocks F with the main projections 85L, 85R of the blocks F2, F3, F4 locked on rear end edges of the side walls 81L, 81R of the lower-stage block, a retaining wall with a 7' gradient can automatically be constructed (FIG. 24).

While not illustrated, however, in the case of gradient stacking, the front and the back of the block F are inverted, the first-stage blocks F1 are disposed on the foundation 12 with the rear bearing plate 84 coming on the front side, and then the second-stage blocks F2 are stacked up zigzag thereon. In this case, since the main projections 85L, 85R of the upper-stage block F2 are engaged with the second main projection engaging grooves 91R, 91L formed on upper surfaces of the side walls 81L, 81R of the lower-stage block F1, the blocks F1 and F2 are interlocked vertically to a stable stacking.

Likewise, the three-stage and four-stage blocks F3, F4 are stacked up, the planting space 83 formed by the front wall 82 is filled up with soil and sand, soil and sand are also piled up on the bearing plate 84, and a suitable plant is implanted in the soil on the bearing plate 84, thus closing the execution work.

FIG. 25 represents a block G given in a further embodiment of the invention.

In the embodiment, a front wall 102 is formed curvilinearly to branch horizontally at a front end of a coupling wall 101 consisting of a single wall member. Then, a bearing plate 104 formed slantingly rearward at a rear end of the coupling wall 101 has its lower portion supported integrally by an overhang 101a of a predetermined height which extends horizontally from a lower portion of the rear end of the coupling wall 101. The overhang 101a has an opening 103 formed on the lower end portion and a pair of main projections 105 provided horizontally on the lower surface. Further, five grooves 107, 108, 109, 110, 111 are formed on the upper surface of the coupling wall 101. Then, of the two grooves 107, 108 near to the front wall 102, the front groove 107 is an auxiliary projection engaging groove for 3' gradient and the next one 108 is an auxiliary projection engaging groove for 5' gradient. Out of the remaining three grooves 109, 110, 111, the two grooves 110, 111 near to the bearing plate 104 are first grooves for main projection engaging, and the former 110 is that for 3' gradient, while the latter 111 for 5' gradient. The middle groove 109 is a second groove for main projection engaging.

Then, a reference character 112 in the drawing denotes an auxiliary projection engaging groove formed on the upper surface of the front wall 102, which is applied for gradient stacking. Further, 106 denotes an auxiliary projection provided on the lower surface of the front wall 102.

While not particularly described herein, the block G is also available for horizontal stacking with varying gradients and gradient stacking by engaging the projections 105, 106 with the grooves 107 to 112 as in the case of the block F described hereinabove. Then, since the opening 103 is provided on an overhang 111a under the bearing plate 104, soil and sand within the planting space will be continuous with the ground soil when a retaining wall is constructed, thus absorbing a water content from the ground efficiently.

In the embodiment, the block G has the front wall 102 formed curvilinearly, therefore a retaining wall viewed soft can be constructed in the case of horizontal stacking, and further since engaging parts are brought together to a single coupling wall, the manufacture is facilitated comparatively, and a manufacture and assembling and demounting of a molding flask also become easy.

In all the embodiments described above, an auxiliary projection is provided further to a main projection, which is engaged with an auxiliary projection engaging groove for strengthening the engaging state of upper and lower blocks, however, the invention is not necessarily restricted thereto, and thus the main projection and engaging first and second recessions may suffice therefor.

Then, there may be a case where a predetermined style strip is sticked on the block surface, thereby preventing the circumambient sight from being spoiled by a retaining wall according to the block.

## Claims

(1) A block for environmental maintenance comprising a front wall, a rear bearing plate inclined rearward, a coupling wall for coupling the front wall and the rear bearing plate, which is characterized in that:

said front wall comprises forming a space zone for planting and so on which is closed forward independently or in cooperation with front walls of the blocks adjacent crosswise thereto;

a projection is provided on the lower surface or the upper surface of said coupling wall;

a first recession engaging with said projection when the upper-stage block is stacked up slidingly in a depth direction to the lower-stage block, and a second recession engaging with said projection when the upper-stage and lower-stage blocks are stacked up with the front walls facing alike are provided on the upper surface or the lower surface of the coupling wall corresponding thereto.

(2) The block for environmental maintenance as defined in Claim I, said front wall being protuberant forward or circular in shape.

(3) The block for environmental maintenance as defined in Claim 1, wherein said front wall is formed to have both side ends overhung rectilinearly horizontally from a front end of the coupling wall, while the rear bearing plate is wide almost in the same length as an interval between both side ends of said front wall and is also formed slantingly rearward.

(4) The block for environmental maintenance as defined in Claim 1, wherein said coupling wall consists of opposite left and right side walls, with the front wall and the rear bearing plate formed integrally on the front ends and the rear ends respectively.

(5) The block for environmental maintenance as defined in Claim 1, wherein said coupling wall consists of a single wall member provided integrally in the middle of an inside of the rear bearing plate, with the front wall formed integrally on the front end.

(6) The block for environmental maintenance as defined in Claim 1, wherein said first recession is provided more than one at a position varying according to a stacking gradient ratio with reference to a depth direction of the block.

(7) The block for environmental maintenance as defined in Claim 1, wherein said first and second recessions are grooves permitting the engaging projection to shift in a cross direction of the block.

# F I G. 1

# F I G. 2

4l

2

A

4r

5L    6    5R

# F I G. 3

10L    4   10R   A

9L    9R

11L   11R

4l

4r

8L         8R

7L

2      3    7R

# F I G. 4

6a   6   A

2   3

1L

5La     5Ra

1R

5L      5R

4l

4       4r

## F I G. 5

## F I G. 6

# F I G. 7

# F I G. 8

A1  A1  A1
3  2  3  2  3  2  2
A2  A2

4  4

# F I G. 10

A1  A1  A1
2
3  3  3  3
A2
3  3  3
A2

4  4

# F I G. 9

# F I G. 11

# FIG. 12

## F I G. 13

# F I G. 14

A3

2

4

IR

5R

A2

IOL

4

2

6

IL

Ia

Al

5L

8R

IIR

4

2

IR

I2

# F I G 15

**FIG. 16**

29L  30L  B  24  31R  29R  30R  31L  28L  27L  21L  21R  28R  27R  22

**FIG. 17**

41  49  50  C  44  48L  47L  51  48R  47R  42

## FIG. 18

## FIG. 19

# F I G. 20

# F I G. 25

# F I G. 21

# F I G. 22

# F I G. 23

# F I G 24

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,A | JP-Y-58 003 873 <br> * figures 1-7 * <br> --- | 1,2,4,6 | E 04 B 2/36 <br> A 01 G 9/02 <br> E 02 D 17/20 |
| D,A | JP-U-54 016 001 <br> * figures 1-4 * <br> --- | 1,4 | |
| A | EP-A-0 016 353 (BAUGESELLSCHAFT NÄGELE & CO.) <br> * figures 1, 8; page 5, lines 11-21 * <br> --- | 1,6 | |
| A | EP-A-0 102 637 (AG HUNZIKER & CIE.) <br> * figures 1-3; page 3, line 21 - page 4, line 4; page 5, lines 3-16 * <br> ----- | 1-4 | |

**TECHNICAL FIELDS SEARCHED (Int. Cl.4)**

E 04 B 2/00
E 02 D 17/00
E 04 C 1/00

The present search report has been drawn up for all claims

| Place of search | Date of completion of the search | Examiner |
|---|---|---|
| BERLIN | 02-11-1987 | BOUSQUET K.C.E. |